# EUROPÄISCHE PATENTSCHRIFT

(11) **EP 2 616 694 B1**
(45) Veröffentlichungstag und Bekanntmachung des Hinweises auf die Patenterteilung: **01.03.2017**
(21) Anmeldenummer: 11748658.9
(22) Anmeldetag: 25.08.2011
(51) Int. Cl.: F16B 25/00, F16B 31/04, F16B 31/06

(54) **SCHRAUBE UND DAMIT HERGESTELLTE VERBINDUNG**
SCREW AND CONNECTION PRODUCED THEREBY
VIS ET ASSEMBLAGE RÉALISÉ AVEC CELLE-CI

(30) Priorität: 17.09.2010 DE 102010037603
(43) Veröffentlichungstag der Anmeldung: 24.07.2013
(73) Patentinhaber: SFS Intec Holding AG, 9435 Heerbrugg (CH)
(72) Erfinder: PALM, Erich, CH-9434 Au (CH)
(86) Internationale Anmeldenummer: PCT/EP2011/064618
(87) Internationale Veröffentlichungsnummer: WO 2012/034835

(56) Entgegenhaltungen:
- WO-A1-2005/042987
- DE-A1- 4 140 936
- DE-U1-202004 015 457
- FR-A1- 2 808 820

## Beschreibung

Die Erfindung betrifft eine Schraube mit einem mit Holzschraubengewinde versehenen Schaft. Außerdem betrifft die Erfindung eine Verbindung eines Bauteils mit einem Unterbau durch wenigstens eine Schraube mit einem mit Holzschraubengewinde versehenen Schaft, wobei der Unterbau aus Stirnholz oder sprödem Material besteht.

Bei einer mit Schrauben hergestellten Stirnholzverbindung besteht das Problem, dass es sich um eine sehr spröde Verbindung handelt, wobei spröde bedeutet, dass die Verbindung bei Belastung plötzlich versagt, also übergangslos, ohne Warnung. Stirnholzverbindungen werden meist mit Hilfe von mehreren nebeneinander angeordneten Schrauben hergestellt. Wegen der Sprödigkeit der Verbindung ist es unerlässlich, dass jede einzelne Schraube genau gleich angezogen wird, damit die Schrauben im Verbund bei Belastung auch alle tragen. Wenn zum Beispiel zwei Schrauben im Verbund zum Herstellen einer Stirnholzverbindung eingesetzt werden und eine davon nicht und die andere maximal angezogen wird, so wird bei Belastung die maximal angezogene Schraube zuerst brechen, danach die nicht angezogene Schraube. Das ist deshalb der Fall, weil jede Schraube alleine trägt und sich somit die zulässige Belastung halbiert. Dieses Versagen wird auch als Reißverschlusseffekt bezeichnet.

Im Metallbau lassen sich zur Vermeidung des vorstehend geschilderten Problems statt Starrschrauben Dehnschrauben einsetzen. Dehnschrauben sind nach DIN 2510 besonders zweckmäßig für Konstruktionen, die durch wechselnde Betriebskräfte und wechselnde Temperaturen beansprucht werden (Apparate, Rohrleitungen, Turbinen). Das günstige Verhalten der Dehnschrauben beruht auf ihrer Elastizität, insbesondere darauf, dass sie bei gleicher Vorspannkraft eine größere elastische Längenänderung aufweisen als Starrschraubenverbindungen. Die Norm geht davon aus, dass bei gleicher Schraubengröße sowohl die Dehnschraube als auch die Starrschraube mit dem gleichen Anzugsmoment angezogen wird. Dieses Verhalten führt zwangsläufig zu einer größeren Dehnung in der Dehnschraube, weil für die Berechnung des Drehmoments der Spannungsquerschnitt, in diesem Fall der Durchmesser des Dehnschaftes, zugrunde gelegt wird. Bei der Starrschraube errechnet sich der Spannungsquerschnitt aus der Mitte zwischen Gewindekern- und Flankendurchmesser des Gewindes. Der Spannungsquerschnitt der Dehnschraube entspricht nur 75% des Spannungsquerschnittes der Starrschraube. Solche Dehnschrauben werden im Metallbau im Allgemeinen im proportionalen (elastischen) Bereich des Spannungs-Dehnungsdiagramms eingesetzt. Das funktioniert im Metallbau, weil der Verspannungspartner ähnliche elastische Eigenschaften wie die Dehnschraube selbst aufweist. Im Fall einer Stirnholzverbindung ist das aber nie der Fall. Daher kann bei einer Stirnholzverbindung von Holzbauteilen für das Verschrauben keine Dehnschraube im Sinne der vorstehenden Definition eingesetzt werden. Die elastische Dehnung lässt sich somit nur im Metallbau ausnutzen, und dort auch nur, wenn die Schrauben mit aufwendigen Methoden ganz präzise angezogen oder vorgespannt werden. Dehnschrauben, wie sie im Maschinenbau eingesetzt werden, sind z.B. aus den Dokumenten EP 0 313 927 B1 und DE-A-21 43 784 bekannt. Dehnschrauben der aus dem Dokument EP 0 313 927 B1 bekannten Art sind dazu bestimmt, mit großer Vorspannkraft angezogen zu werden, um bei den miteinander verschraubten Teilen, z.B. den Lagerteilen von Pleuelstangen, unter Betriebsbeanspruchungen ein wesentliches Aufklaffen der Teilfuge zu vermeiden. Zur Erzielung der gewünscht großen Vorspannkraft werden solche Dehnschrauben über ihren elastischen Grenzbereich hinaus in den plastischen Bereich hinein verformt. Dazu erfolgt das Anziehen der Dehnschrauben drehwinkel- oder streckgrenzengesteuert. Bei Pleuelstangen sind besonders hohe Vorspannkräfte deswegen erwünscht, weil eine exzentrische Betriebsbeanspruchung der Schrauben vorliegt. Aus dem Dokument DE-A-21 43 784 sind Schraubenbolzen bekannt, die ebenfalls bei den Pleuelstangen von Verbrennungsmotoren eingesetzt werden. Dieses Dokument befasst sich damit, das Befestigungs- und Anziehdrehmoment zu erhöhen. Im konstruktiven Holzbau sind solche Schrauben aus den oben dargelegten Gründen nicht einsetzbar.

Aus dem Dokument WO 2005/042987 A1 ist ein als Dehnschraube ausgebildetes Befestigungselement bekannt, das im Betonbau eingesetzt wird. In diesem Bereich ist es möglich, ein auf einem Unterbau zu befestigendes Bauteil mit einer starken Kraft gegen den Unterbau anzupressen. Die Schraube ist zu diesem Zweck außer mit einem Dehnbereich mit einem Betongewinde versehen, so dass sich das Befestigungselement wie eine Betonschraube in ein vorher hergestelltes Bohrloch einschrauben lässt. Bei einem entsprechend langen Schaftabschnitt führt auch das Betongewinde aufgrund seiner großen Länge zu einem sehr sicheren Festlegen und zu einem besonders guten Formschluss. Für eine Stirnholzverbindung wäre dieses bekannte Befestigungselement ebenfalls nicht einsetzbar.

Aus dem Dokument FR 2 808 820 A1 ist ein Verbinder bekannt, über den sich eine Betonplatte mit einem Fußboden verbinden lässt. Der Verbinder wird so weit in den Fußboden eingeschraubt, dass er mit einem Kopf und einem sich darunter anschließenden gewindefreien Schaftabschnitt aus dem Fußboden hervorsteht. Anschließend wird die Betonplatte gegossen. Der Verbinder hat einen kegelstumpfartigen Schaft mit einem Gewinde, dessen Scheitel auf einer zylindrischen Hüllfläche liegt, die zu dem kegelstumpfartigen Teil des Schaftes koaxial ist. Das Material (Metall) des Verbinders wird so gewählt, dass dieser plastisch verformbar ist, um dessen Reißen unter Zug- oder Scherbeanspruchung zu vermeiden. Der Verbinder ist so insgesamt duktil, um Verformungen ausreichend zu tolerieren und Beanspruchungen über seine gesamte Länge zu verteilen.

Aus dem Dokument DE 20 2004 015 457 U1 ist eine Schraube bekannt, die zwar zum Verbinden einer ersten oberen Lage Holzelemente und einer zweiten unteren Lage Holzelemente eingesetzt wird, jedoch handelt es sich dabei nicht um Stirnholzverbindungen. Es geht vielmehr um eine Befestigungskonstruktion von Blechtafeln, insbesondere von Aluminium-Stahl-Profilblechen auf Holz. Es geht dabei um das Problem, dass sich Schraub-Befestigungselemente bei dynamischer Windbelastung eines Daches selbst herausdrehen können oder aus ihrem Sitz springen können. Deshalb wird diese bekannte Schraube so ausgebildet, dass sich im Fugenbereich zwischen den beiden Lagen von Holzelementen nicht der Übergang zwischen Gewindeabschnitt und gewindelosem Abschnitt befindet, sondern der biegsame Schaft der Schraube. Diese Schraube wird also nicht durch Zugkraft belastet, sondern ist lediglich Biegekräften ausgesetzt. Die Biegekräfte werden dadurch kompensiert, dass das Schraubloch aufgeweitet wird und dass der gewindelose Schaftabschnitt eine größere Länge aufweist als die Dicke der unteren Lage von Holzelementen. Der gewindelose Schaftabschnitt kann sich deshalb auf einer langen Strecke biegen. Auf diese Weise werden die örtliche Rotation der Schraube und die lokale Beanspruchung auf ein Minimum reduziert.

Aufgabe der Erfindung ist es, eine Schraube der eingangs genannten Art so auszubilden, dass sie bei Einsatz im konstruktiven Holzbau eine Stirnholzverbindung weniger spröde macht, also verhindert, dass eine solche Verbindung plötzlich versagt. Außerdem soll eine Verbindung der eingangs genannten Art so verbessert werden, dass bei ihr ein plötzliches Versagen ausgeschlossen ist, ein einsetzendes Versagen aber rechtzeitig vor dem endgültigen Reißen der Verbindung sichtbar wird.

Diese Aufgabe ist ausgehend von einer Schraube der eingangs genannten Art erfindungsgemäß dadurch gelöst, dass der Schaft auf einem Teil seiner Länge als ein duktiler Dehnbereich ausgebildet ist und dass sich der Dehnbereich außerhalb des mit dem Holzschraubengewinde versehenen Teils des Schaftes erstreckt und einen Durchmesser hat, der kleiner ist als der Kerndurchmesser des Gewindes.

Ausgehend von einer Verbindung der eingangs genannten Art ist die Aufgabe erfindungsgemäß dadurch gelöst, dass die oder jede bei der Verbindung eingesetzte Schraube eine erfindungsgemäße Schraube ist, die bei dem Herstellen der Verbindung nicht vorgespannt worden ist, und dass die zwischen dem (den) Holzschraubengewinde(n) und dem Unterbau übertragbare Zugkraft größer ist als die maximale Zugkraft, mit der der Dehnbereich belastbar ist.

Die Schraube nach der Erfindung, die einen duktilen Dehnbereich aufweist, erlaubt zwar nicht die Ausnutzung der elastischen Dehnung, was sowieso nur im Metallbau machbar ist, und dort auch nur, wenn die Schraube präzise vorgespannt wird, die Schraube nach der Erfindung ermöglicht jedoch, unter Ausnutzung von deren plastischem Verformungsverhalten aus einer sehr spröden Verbindung (wie dies die Stirnholzverbindung darstellt) eine weiche, duktile Verbindung zu erhalten. Ein duktiles Verhalten einer Verbindung wird im konstruktiven Holzbau zwar allgemein angestrebt, ist bislang jedoch bei Stirnholzverbindungen nie realisiert worden.

Dadurch, dass sich bei der Schraube nach der Erfindung der Dehnbereich außerhalb des mit Holzgewinde versehenen Bereiches erstreckt und einen Durchmesser hat, der kleiner ist als der Kerndurchmesser des Gewindes, werden die Herstellung der Schraube und das Festlegen der gewünschten duktilen Eigenschaften in Kombination mit dem gewählten Material erleichtert.

Bei der erfindungsgemäßen Verbindung dient das duktile Verhalten dazu, dass im Verbund mehrerer Schrauben auch alle bei Belastung tragen, ohne dass jede einzelne Schraube genau gleich angezogen werden muss. Der Fall, dass jede Schraube alleine trägt und sich somit bei dem Einsatz von zwei Schrauben in dem oben erwähnten Beispiel die maximal zulässige Belastung halbiert, also der sogenannte Reißverschlusseffekt eintritt, wird durch die Erfindung vermieden. Dadurch, dass bei der Verbindung nach der Erfindung die zwischen dem (den) Holzschraubengewinde(n) und dem Unterbau übertragbare Zugkraft größer ist als die maximale Zugeblastbarkeit des Dehnbereiches, wird das Ziel erreicht, dass das Versagen in jedem Falle im Befestiger stattfindet. Das ergibt duktile, reproduzierbare Ergebnisse, weil statt hochfester Schrauben niedrig festes Material eingesetzt wird.

Vorteilhafte Ausgestaltungen der Erfindung bilden die Gegenstände der abhängigen Ansprüche.

In einer Ausgestaltung der Schraube nach der Erfindung ist der duktile Dehnbereich über dem größten Teil der nutzbaren Zugdehnung plastisch verformbar. Hierfür werden die duktilen Eigenschaften des Dehnbereiches der Schraube genutzt. In dieser Ausgestaltung der erfindungsgemäßen Schraube ist diese mit einer herkömmlichen Dehnschraube, wie sie im Metall- und Betonbau eingesetzt wird, nicht vergleichbar, weil bei ihr nicht der elastische Bereich des Spannungs-Dehnungsdiagramms ausgenutzt wird, sondern alleine der plastische Bereich. In diesem Bereich "fließt" die Schraube.

In einer weiteren Ausgestaltung der Schraube nach der Erfindung ergibt sich die plastische Verformbarkeit durch das Material der Schraube und/oder die Ausbildung des Dehnbereiches. Zur Erzielung des plastischen Verformungsverhaltens können somit das Material und/oder die Abmessung des Dehnbereiches entsprechend gewählt werden.

In einer weiteren Ausgestaltung der Schraube nach der Erfindung ist das gewählte Material Stahl mit einer Zugfestigkeit von 200 bis 800 N/mm². Die Schraube besteht in dieser Ausgestaltung aus einem weichen Material, denn Stahl, wie er üblicherweise bei den Schrauben im Metallbau eingesetzt wird, hat eine Zugfestigkeit in der Größenordnung von 1.400 bis 1.600 N/ mm².

In einer Ausgestaltung der Verbindung nach der Erfindung sind die Verankerung des Holzschraubengewindes und der Durchmesser desselben gegenüber der Ausbildung des Dehnbereiches so gewählt, dass der Dehnbereich versagt, bevor die Gewindeverbindung im Bereich der Verankerung des Holzschraubengewindes versagt. Dadurch ist sichergestellt, dass eine Stirnholzverbindung der Schraube der erwarteten Belastung auf jeden Fall stand hält.

Ausführungsbeispiele der Erfindung werden im Folgenden unter Bezugnahme auf die Zeichnungen näher beschrieben. Es zeigt
- Fig.1: in einer Schnittdarstellung eine Verbindung eines Bauteils mit einem aus Stirnholz oder sprödem Material bestehenden Unterbau mit Hilfe einer ersten Ausführungsform einer Schraube nach der Erfindung,
- Fig. 2: die Belastung einer Schraubenverbindung in einem Diagramm, in welchem die Häufigkeit über der Kraft aufgetragen ist und die Belastbarkeit des Dehnbereiches und des Verankerungsbereiches des Holzschraubengewindes bei einer Stirnholzverbindung gezeigt sind,
- Fig.3: eine Verbindung eines Bauteils mit einem Unterbau mit Hilfe einer zweiten Ausführungsform der Schraube nach der Erfindung,
- Fig. 4: als eine Einzelheit eine dritte Ausführungsform einer Schraube nach der Erfindung mit einem mit Holzschraubengewinde versehenen Schaft, der auf einem Teil seiner Länge als ein duktiler Dehnbereich ausgebildet ist,
- Fig. 5: ein Spannungs-Dehnungsdiagramm der Schraube nach Fig. 4,
- Fig. 6: ein Ausführungsbeispiel einer Stirnholzverbindung, die mit Hilfe von neun Schrauben nach der Erfindung hergestellt ist, anschließend an einen Zugtest,
- Fig. 7: die Stirnholzverbindung nach Fig. 6, die aber nach duktiler Dehnung der Schrauben und vor dem Reißen derselben gezeigt ist, und
- Fig. 8: ein Bohrbild für die Stirnholzverbindungen nach den Fig. 6 und 7.

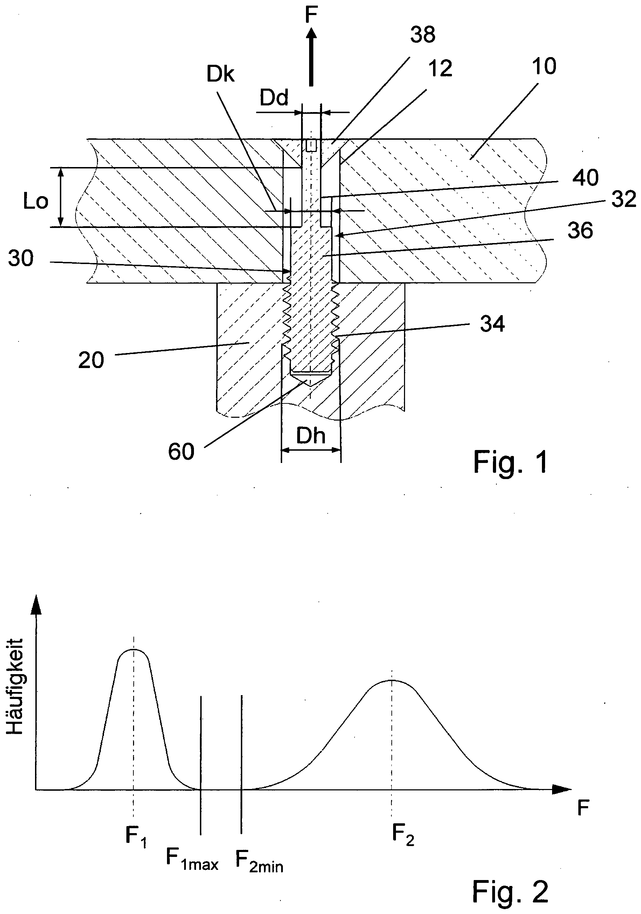

Fig. 1 zeigt in einer Schnittdarstellung eine Verbindung eines Bauteils 10 mit einem aus Stirnholz oder sprödem Material bestehenden Unterbau 20 mit Hilfe einer ersten Ausführungsform einer Schraube 30 nach der Erfindung. In dem hier beschriebenen Ausführungsbeispiel ist die Schraube 30 einstückig aus Stahl mit einer Zugfestigkeit von 200 bis 800 N/mm² hergestellt. Die Schraube hat einen Schaft 32, der mit einem Holzschraubengewinde 34 versehen ist. An den Schaftabschnitt mit dem Holzschraubengewinde 34 schließt sich ein gewindefreier Schaftabschnitt 36 an, an den sich weiter in Richtung zu einem Kopf 38 der Schraube ein duktiler Dehnbereich 40 anschließt. Der Kopf 38 ist in dem gezeigten Ausführungsbeispiel ein Flachsenkkopf. Das Bauteil 10 hat eine Durchgangsbohrung 12, durch welche die Schraube 30 frei hindurchgeführt und in ein in dem Unterbau 20 gebildetes Sackloch 60 eingeschraubt worden ist. Dabei ist die Schraube 30 angezogen worden, um das Bauteil 10 an den Unterbau 20 anzudrücken. Bei dem Herstellen der Verbindung des Bauteils 10 mit dem Unterbau 20 ist die Schraube 30 zwar angezogen worden, sie ist jedoch nicht vorgespannt worden. Eine in Fig. 1 durch einen Pfeil dargestellte Kraft F ergibt sich somit nicht durch das Anziehen der Schraube 30, sondern dann, wenn auf das Bauteil 10 eine von dem Unterbau 20 weg gerichtete Kraft ausgeübt wird.

Die Schraube 30 ist, abgesehen von der Ausbildung des Kopfes, dem gewählt niedrigfesten Stahl und dem zusätzlich vorgesehenen duktilen Dehnbereich eine übliche Holzschraube mit dem Merkmal von Holzschrauben nach DIN 571 und insbesondere mit einem Holzschraubengewinde nach DIN 7998.

Das Holzschraubengewinde 34 der Schraube 30 hat einen Kerndurchmesser Dk. Der Außendurchmesser des gewindefreien Schaftabschnittes 36 ist gleich dem Kerndurchmesser Dk. Der Dehnbereich 40 der Schraube 30 hat einen Durchmesser Dd, der wesentlich kleiner ist als der Kerndurchmesser Dk. Weiter hat der Dehnbereich 40 eine Länge Lo, die seine Ausgangslänge ist. Durch plastische Verformung kann die Länge des Dehnbereiches um eine Strecke ΔL vergrößert werden. Für die Dehnung gilt ε = ΔL/Lo. Das ist weiter unten noch näher erläutert.

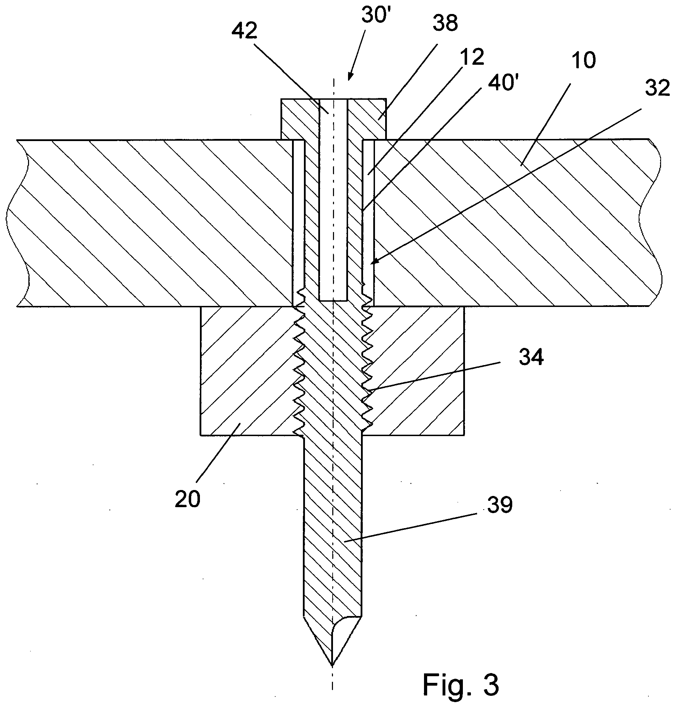

Fig. 3 zeigt eine Verbindung des Bauteils 10 mit dem Unterbau 20 mit Hilfe einer zweiten Ausführungsform einer Schraube 30' nach der Erfindung. Die Schraube 30' unterscheidet sich von der Schraube 30 hauptsächlich dadurch, dass der gewindefreie Schaftabschnitt 36 den Dehnbereich 40 bildet, der hier hülsenartig ausgebildet ist. Im Bereich des Kopfes 38 und des Dehnbereiches 40 erstreckt sich eine Bohrung 42 durch die Schraube, die bis zu dem Anfang des Holzschraubengewindes 34 reicht. Ein zu dem Kopf 38 entgegengesetzter gewindefreier Schaftabschnitt 39 ist mit einer Bohrspitze versehen.

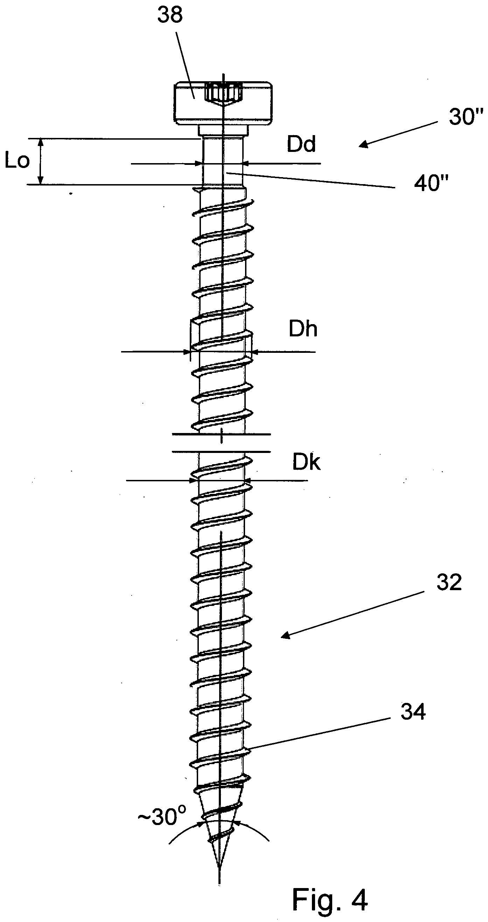

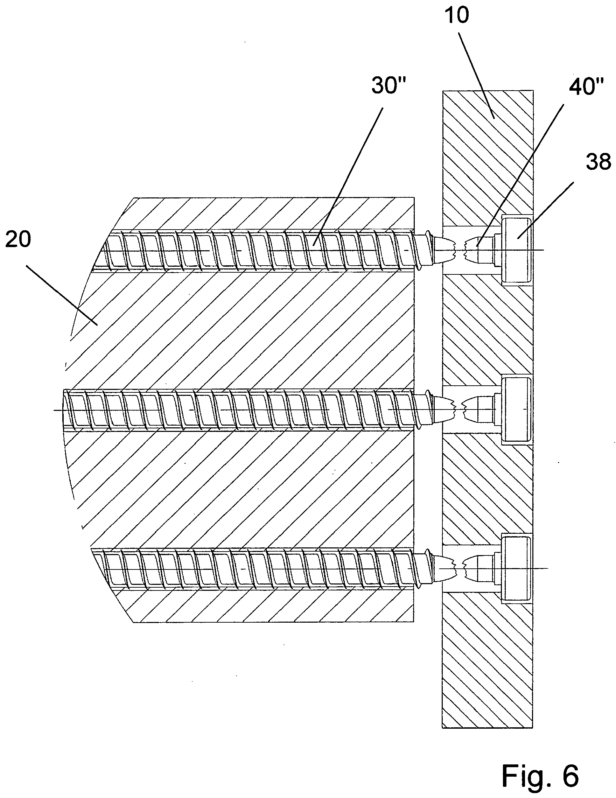

Fig. 4 zeigt als eine Einzelheit eine dritte Ausführungsform einer Schraube 30" nach der Erfindung, deren Schaft 32 mit dem Holzschraubengewinde 34 versehen ist und auf einem Teil seiner Länge, welcher dem Kopf 38 benachbart ist, als ein duktiler Dehnbereich 40" ausgebildet ist. Die Schraube 30" besteht aus Stahl mit einer Zugfestigkeit von 550 N/mm². Mit dieser Schraube sind Zugversuche durchgeführt worden, welche in den Fig. 6-8 veranschaulicht sind.

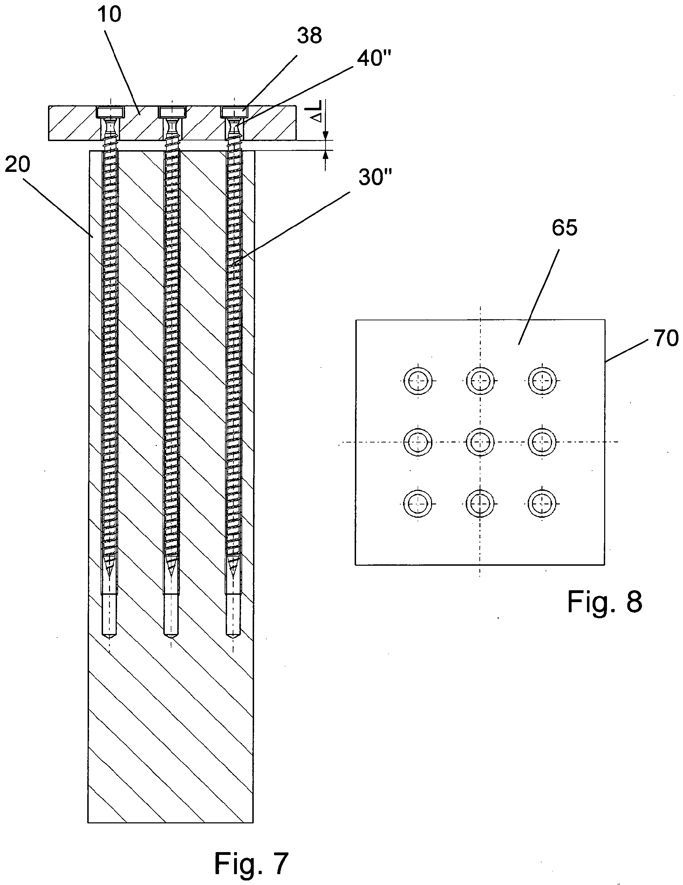

Fig. 6 zeigt ein Ausführungsbeispiel einer Stirnholzverbindung, die mit Hilfe von neun Schrauben 30" hergestellt worden ist, anschließend an einen Zugtest, nachdem die Schrauben gerissen sind. Ein Bohrbild 65 der Schrauben 30" ist in Fig. 8 gezeigt. Die Stirnholzverbindung ist mit einer Metallplatte 70 an einem Vierkantholz mit einer Querschnittsabmessung von 120 mm x 120 mm hergestellt worden. Die Schrauben 30' wurden in dem Vierkantholz auf einer Länge von ca. 330 mm verankert. Diese Länge ist in Fig. 4 die von dem Dehnbereich 40" bis zur Spitze der Schraube 30" gemessene Länge.

Fig. 7 zeigt die Stirnholzverbindung nach Fig. 6, aber nach duktiler Dehnung der Schrauben 30" und vor dem Reißen derselben. In diesem Zustand beträgt die der Dehnung ε entsprechende Längenänderung ΔL etwa 5 mm.

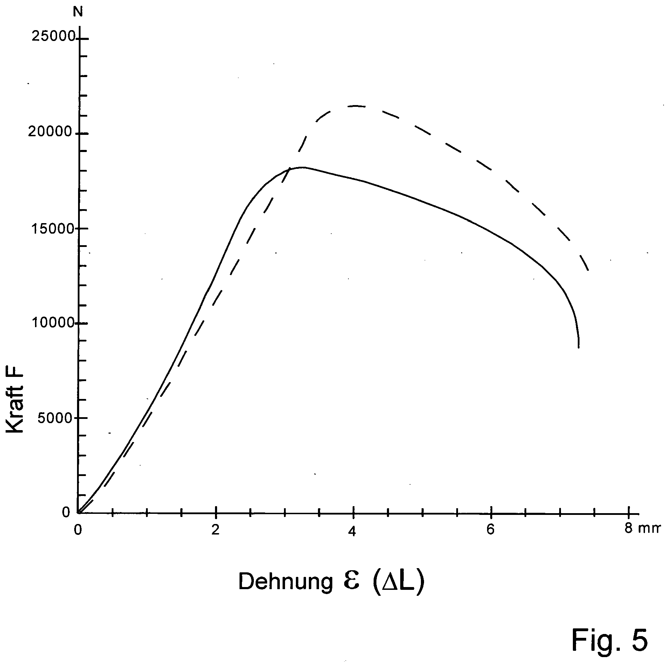

Fig. 2 zeigt ein Spannungs- Dehnungsdiagramm der Schraube 30" nach Fig. 4. Die beiden in Fig. 5 dargestellten Kennlinien haben sich für zwei baugleiche Schrauben ergeben. Als Beispiel werde die untere Kurve in Fig. 5 betrachtet. Es ist zu erkennen, dass der Bereich elastischer Dehnung der Schraube bis etwa ε = 3 mm reicht, genauer gesagt, bis ΔL = 3 mm. Von da an beginnt die Schraube 30" in ihrem Dehnbereich 40" plastisch zu fließen. Sie reißt schließlich bei einer Dehnung ε, die knapp unter ΔL = 8 mm liegt. Der Bereich von 3 bis ca. 8 mm Dehnung ist somit nutzbar, um eine starke Belastung der Stirnholzverbindung sichtbar zu machen, wie es in Fig. 7 zu erkennen ist. Die Stirnholzverbindung ist also nicht mehr spröde und versagt plötzlich, übergangslos, sondern sie ist duktil und signalisiert, dass etwas zur Stützung der Verbindung unternommen werden sollte, bevor diese endgültig reißt. Bei der erfindungsgemäßen Verbindung nach den Fig. 6 und 7 wird das dadurch erreicht, dass die Verankerung des Holzschraubengewindes 34 und der Durchmesser Dh desselben gegenüber der Ausbildung des Dehnbereiches 40" so gewählt sind, dass der Dehnbereich 40" versagt, bevor die Gewindeverbindung im Bereich der Verankerung des Holzschraubengewindes 34 versagt.

In dem in Fig. 7 gezeigten Zustand beträgt die Dehnung ε etwa 0,05 und sollte stets größer oder gleich diesem Wert sein. Anschaulich zeigen lässt sich das anhand von Fig. 2, die die Belastung einer Schraubenverbindung in einem Diagramm zeigt, in welchem die Häufigkeit über der Kraft F aufgetragen ist und die Belastbarkeit des Dehnbereiches und des Verankerungsbereiches des Holzschraubengewindes 34 bei einer Stirnholzverbindung gezeigt sind. F1 ist eine Kraft, die im Dehnbereich übertragbar ist, F2 ist eine Kraft, die im Unterbau übertragen werden kann. Wenn wie in dem Diagramm nach Fig. 2 die Kraft F1, die im Dehnbereich übertragbar ist, überwiegend größer ist als die Kraft F2, die im Unterbau übertragbar ist, so ist die mit der Erfindung angestrebte Bedingung erfüllt, dass die zwischen dem Holzschraubengewinde 34 und dem Unterbau 20 übertragbare Zugkraft stets größer sein soll als die maximale Kraft mit der der Dehnbereich 40 auf Zug belastbar ist.

### Bezugszeichenliste

- 10: Bauteil
- 20: Unterbau
- 30: Schraube
- 30': Schraube
- 30": Schraube
- 32: Schaft
- 34: Holzschraubengewinde
- 36: gewindefreier Schaftabschnitt
- 38: Kopf
- 39: gewindefreier Schaftabschnitt
- 40: Dehnbereich
- 40': Dehnbereich
- 40": Dehnbereich
- 42: Bohrung
- 60: Sackloch
- 65: Bohrbild
- 70: Metallplatte

- ε: Dehnung
- Dd: Durchmesser Dehnbereich
- Dh: Durchmesser Holzschraubengewinde
- Dk: Kerndurchmesser Holzschraubengewinde
- Lo: Ausgangslänge
- ΔL: Längenänderung durch Dehnung
- F: Zugkraft
- F1: im Dehnbereich übertragbare maximale Kraft
- F2: im Unterbau (Stirnholz) übertragbare Zugkraft

## Patentansprüche

1. Schraube mit einem mit Holzschraubengewinde (34) versehenen Schaft (32),
**dadurch gekennzeichnet, dass** der Schaft (32) auf einem Teil seiner Länge als ein duktiler Dehnbereich (40, 40', 40") ausgebildet ist und dass sich der Dehnbereich (40, 40', 40") außerhalb des mit dem Holzschraubengewinde (36) versehenen Teils des Schaftes (32) erstreckt und einen Durchmesser (Dd) hat, der kleiner ist als der Kerndurchmesser (Dk) des Gewindes (34).

2. Schraube nach Anspruch 1, **dadurch gekennzeichnet, dass** der Dehnbereich (40, 40', 40") über dem größten Teil der nutzbaren Zugdehnung plastisch verformbar ist.

3. Schraube nach Anspruch 2, **dadurch gekennzeichnet, dass** sich die plastische Verformbarkeit durch das Material der Schraube (30, 30', 30") und/oder die Ausbildung des Dehnbereiches (40, 40', 40") ergibt.

4. Schraube nach Anspruch 3, **dadurch gekennzeichnet, dass** das gewählte Material Stahl mit einer Zugfestigkeit von 200 bis 800 N/mm² ist.

5. Verbindung eines Bauteils mit einem Unterbau durch wenigstens eine Schraube mit einem mit Holzschraubengewinde versehenen Schaft, wobei der Unterbau aus Stirnholz oder sprödem Material besteht,
**dadurch gekennzeichnet, dass** die oder jede Schraube (30, 30', 30") eine Schraube nach einem der vorhergehenden Ansprüche ist, die bei dem Herstellen der Verbindung nicht vorgespannt worden ist, und
dass die zwischen dem (den) Holzschraubengewinde(n) (34) und dem Unterbau (20) übertragbare Zugkraft (F₂) größer ist als die maximale Zugkraft (F₁), mit der der Dehnbereich (40, 40', 40") belastbar ist.

6. Verbindung nach Anspruch 5, **dadurch gekennzeichnet, dass** die Verankerung des Holzschraubengewindes (34) und der Durchmesser (Dh) desselben gegenüber der Ausbildung des Dehnbereiches (40, 40', 40") so gewählt sind, dass der Dehnbereich (40, 40', 40") versagt, bevor die Gewindeverbindung im Bereich der Verankerung des Holzschraubengewindes (34) versagt.

## Claims

1. Screw comprising a shank (32) having a wood screw thread (34),
**characterised in that** one part of the length of the shank (32) is designed as a ductile extensible region (40, 40', 40"), and **in that** the extensible region (40, 40', 40") extends outside the part of the shank (32) provided with the wood screw thread (36) and has a diameter (Dd) which is smaller than the core diameter (Dk) of the thread (34).

2. Screw according to claim 1, **characterised in that** the extensible region (40, 40', 40") is plastically deformable over the majority of the tensile elongation which can be used.

3. Screw according to claim 2, **characterised in that** the plastic deformability is obtained by the material of the screw (30, 30', 30") and/or the design of the extensible region (40, 40', 40").

4. Screw according to claim 3, **characterised in that** the selected material is steel having a tensile strength of from 200 to 800 N/mm².

5. Connection of a component to a substructure by at least one screw comprising a shank having a wood screw thread, the substructure consisting of end-grain wood or a brittle material, **characterised in that** the or each screw (30, 30', 30") is a screw according to any of the preceding claims, which has not been pre-tensioned when producing the connection, and **in that** the tensile force (F₂) which is transferable between the wood screw thread(s) (34) and the substructure (20) is greater than the maximum tensile force (F₁) with which the extensible region (40, 40', 40") can be loaded.

6. Connection according to claim 5, **characterised in that** the anchoring of the wood screw thread (34) and the diameter (Dh) thereof in relation to the design of the extensible region (40, 40', 40") are selected such that the extensible region (40, 40', 40") fails before the thread connection in the anchoring region of the wood screw thread (34) fails.

## Revendications

1. Vis comportant une tige ayant un filetage de vis à bois (34),
**caractérisée en ce que**
la tige (32) est réalisée sur une partie de sa longueur sous la forme d'une zone allégée ductile (40, 40', 40"), et la zone allégée (40, 40', 40") s'étend à l'extérieur de la partie de la tige (32) équipée du filetage de vis à bois (36) et à un diamètre (Dd) qui est inférieur au diamètre (Dk) de l'âme du filetage (34).

2. Vis conforme à la revendication 1,
**caractérisée en ce que**
la zone allégée (40, 40', 40") est plastiquement déformable sur la plus grande partie d'allongement à la traction utilisable.

3. Vis conforme à la revendication 2,
**caractérisée en ce que**
la possibilité de déformation plastique est obtenue par le matériau constitutif de la vis (30, 30', 30") et/ou la configuration de la zone allégée (40, 40', 40").

4. Vis conforme à la revendication 3,
**caractérisée en ce que**
le matériau choisi est de l'acier ayant une résistance à la traction de 200 à 800 N/mm².

5. Assemblage d'une pièce avec une infrastructure par au moins une vis comportant une tige équipée d'un filetage de vis à bois, l'infrastructure étant réalisée en bois de bout ou en un matériau fragile,
**caractérisé en ce que**
là où chacune des vis (30, 30', 30") est une vis conforme à l'une des revendications précédentes qui n'a pas été précontrainte lors de la réalisation de l'assemblage, et la force de traction (F₂) pouvant être transmise entre le ou les filetage(s) de vis à bois (34) et l'infrastructure (20) est supérieure à la force de traction maximum (F₁) avec laquelle la zone allégée (40, 40', 40") peut être chargée.

6. Assemblage conforme à la revendication 5,
**caractérisé en ce que**
l'ancrage du filetage de vis à bois (34) et son diamètre (Dh) par rapport à la configuration de la zone allégée (40, 40', 40") sont sélectionnés de sorte que la zone allégée (40, 40', 40") défaille avant la défaillance de la liaison du filetage ne fonctionne plus dans la zone de l'ancrage du filetage de vis à bois (34).
